(19) Europäisches Patentamt
European Patent Office
Office européen des brevets

(11) **EP 3 369 541 A1**

(12) **EUROPEAN PATENT APPLICATION**
published in accordance with Art. 153(4) EPC

(43) Date of publication:
05.09.2018 Bulletin 2018/36

(51) Int Cl.:
*B29C 43/02* (2006.01)     *B29C 43/32* (2006.01)
*B29C 43/52* (2006.01)

(21) Application number: 16859398.6

(22) Date of filing: 01.09.2016

(86) International application number:
PCT/JP2016/075648

(87) International publication number:
WO 2017/073161 (04.05.2017 Gazette 2017/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 30.10.2015 JP 2015214015

(71) Applicant: Sumitomo Chemical Company, Ltd.
Chuo-ku
Tokyo 104-8260 (JP)

(72) Inventors:
• MATSUI, Kazuya
  Ichihara-shi
  Chiba 299-0195 (JP)
• SHIMOJIMA, Hiroaki
  Ichihara-shi
  Chiba 299-0195 (JP)

(74) Representative: Vossius & Partner
Patentanwälte Rechtsanwälte mbB
Siebertstrasse 3
81675 München (DE)

(54) **MOLDED ARTICLE MANUFACTURING METHOD**

(57)     Provided is a method for producing a molded body by which a molded body of a thermoplastic material can be produced in short molding cycle.

Provided is a method for producing a molded body comprising a step of compressing a molding precursor comprising a thermoplastic resin between a pair of molding dies having an insulation site at a surface coming into contact with the molding precursor, to obtain a molded body, wherein
the temperature $T_A$ of said molding precursor at the start of compression satisfies the following formula 1,
the temperature of said pair of molding dies at the start of compression is temperature $T_B$ satisfying the following formula 2, and
said insulation site is an insulation site, wherein a heat conduction coefficient is 5 W/(m•K) or less and the dynamic friction coefficient of the surface coming into contact with said molding precursor against said molding precursor is 0.25 or less.

$$\text{formula 1: } E'(-100) \times 0.04 < E'(T_A) < E'(-100) \times 0.13$$

$$\text{formula 2: } E'(-100) \times 0.3 < E'(T_B) < E'(-100) \times 0.7$$

Figure. 1

**Description**

Technical Field

The present invention relates to a method for producing a molded body.

Background Art

As the method for producing a molded body comprising a thermoplastic resin, methods for forming a thermoplastic resin under melted condition such as injection molding, and melt press molding are predominantly used. However, a molded body produced by such methods has low impact resistance in some cases.
As the method for improving impact resistance of a molded body, for example, Patent Document 1 describes a method in which a crystalline polyolefin resin heated around melting point is biaxially stretched to produce a molded body.

Prior Art Document

Patent Document

Patent Document 1: JP-A No. Hei-61-64427

Summary of the Invention

Problem to be Solved by the Invention

The method described in Patent Document 1, however, has a problem of elongated molding cycle because a cooling step is required for drawing a molded body obtained after compressing a resin heated around melting point. Under such conditions, the present invention has an object of providing a method for producing a molded body capable of producing a molded body in short molding cycle.

Means for Solving the Problem

The present invention is a method for producing a molded body comprising a step of compressing a molding precursor comprising a thermoplastic resin between a pair of molding dies having an insulation site at a surface coming into contact with the molding precursor, to obtain a molded body, wherein
the temperature $T_A$ of the molding precursor at the start of compression satisfies the following formula 1,

the temperature of the pair of molding dies at the start of compression is temperature $T_B$ satisfying the following formula 2, and the insulation site is an insulation site, wherein a heat conduction coefficient is 5 W/(m•K) or less and the dynamic friction coefficient of the surface coming into contact with the molding precursor against the molding precursor is 0.25 or less:

$$\text{formula 1: } E'(-100) \times 0.04 < E'(T_A) < E'(-100) \times 0.13$$

$$\text{formula 2: } E'(-100) \times 0.3 < E'(T_B) < E'(-100) \times 0.7$$

(wherein, $E'(T_A)$ is a value of the storage elastic modulus of the molding precursor at the temperature $T_A$, $E'(T_B)$ is a value of the storage elastic modulus of the molding precursor at the temperature $T_B$, and $E'(-100)$ is a value of the storage elastic modulus of the molding precursor at - 100°C.).
In other words, the present invention is a molded body production method comprising compressing a molding precursor comprising a thermoplastic resin with a pair of molding dies having an insulation site at a surface coming into contact with the molding precursor, to obtain a molded body, wherein
the insulation site has a heat conduction coefficient of 5 W/(m•K) or less and has a surface coming into contact with the molding precursor in the compression, and the dynamic friction coefficient of the surface against the molding precursor is 0.25 or less, and
the molding precursor is compressed under conditions satisfying the following formulae 1 and 2:

$$\text{formula 1: } E'(-100) \times 0.04 < E'(T_A) < E'(-100) \times 0.13$$

$$\text{formula 2: } E'(-100) \times 0.3 < E'(T_B) < E'(-100) \times 0.7$$

(wherein, $E'(T_A)$ is a value of the storage elastic modulus of the molding precursor at the temperature $T_A$ ($T_A$ is the temperature of the molding precursor at the start of compression), $E'(T_B)$ is a value of the storage elastic modulus of the molding precursor at the temperature $T_B$ ($T_B$ is the temperature of the pair of molding dies at the start of compression), and $E'(-100)$ is a value of the storage elastic modulus of the molding precursor at - 100°C.).

Effect of the Invention

According to the present invention, a molded body of a thermoplastic material can be produced in short molding cycle.

Brief Explanation of Drawings

Fig. 1 is a schematic front view of a molding die used in one embodiment of the present invention.
Fig. 2 is a schematic front view of a molding die in Reference Example 1.

Embodiments for Carrying Out the Invention

<Thermoplastic resin>

The thermoplastic resin is a resin which softens to show flowability when heated. The thermoplastic resin includes crystalline resins and amorphous resins. The crystalline resin is a resin having crystalline structure at certain temperature, and the amorphous resin is a resin having no crystalline structure at any temperature.
The crystalline resin includes, for example, olefin resins, ester resins, amide resins and crystalline engineering plastics. From the standpoint of economic efficiency, olefin resins and ester resins are preferable.
In the present invention, the olefin resin is a resin containing a monomer unit derived from an olefin in an amount of more than 50% by weight. The olefin resin includes a propylene resin and an ethylene resin. The propylene resin is a resin containing a monomer unit derived from propylene in an amount of more than 50% by weight. The propylene resin includes propylene homopolymer, propylene ethylene copolymer, propylene butene copolymer and propylene hexene copolymer. The ethylene resin is a resin containing a monomer unit derived from ethylene in an amount of more than 50% by weight. The ethylene resin includes high density linear polyethylene, low density linear polyethylene and high pressure process low density polyethylene.
In the present invention, the ester resin is a resin obtained by copolymerizing a polyvalent carboxylic acid and a polyhydric alcohol. The ester resin includes polyethylene terephthalate, polybutylene terephthalate and polyethylene naphthalate.
In the present invention, the the amide resin is a resin composed of a polymer in which monomers are bonded via an amide bond. The amide resin includes polyamide 6, polyamide 66, polyamide 11, polyamide 12 and polymethacrylimide.
In the present invention, the crystalline engineering plastic is a resin having a crystalline structure and having a tensile strength of 50 MPa or more and a bending elastic modulus of 2400 MPa or more. The crystalline engineering plastic includes polyacetal, polyphenylene sulfide, polyether ether ketone, liquid crystal polymer and polytetrafluoroethylene.
The amorphous resin includes, for example, styrene resins, acryl resins, polyacrylonitrile and amorphous engineering plastics, and preferable from the standpoint of economic efficiency are styrene resins and acryl resins.
In the present invention, the styrene resin is a resin containing a monomer unit derived from styrene in an amount of more than 50% by weight. The styrene resin includes polystyrene, styrene-acrylonitrile copolymer and styrene-acrylonitrile-butadiene copolymer.
In the present invention, the acryl resin is a resin containing a monomer unit derived from an acrylic acid ester or a methacrylic acid ester in an amount of more than 50% by weight. The acryl resin includes polymethyl methacrylate, polyethyl methacrylate, polymethyl acrylate, polyethyl acrylate, and methyl acrylate-methyl methacrylate copolymer.

In the present invention, the amorphous engineering plastic is a resin having no crystalline structure and having a tensile strength of 50 MPa or more and a bending elastic modulus of 2400 MPa or more. The amorphous engineering plastic includes polycarbonate, polyphenylene ether, polyarylate, polysulfone, polyether sulfone, polyether imide, and polyamide-imide.

Melt mass-flow rate (hereinafter, written as MFR in some cases) of the thermoplastic resin is preferably 0.1 g/10 min or more and 100 g/10 min or less, more preferably 1 g/10 min or more and 50 g/10 min or less, from the standpoint of shortening of molding cycle and attainment of more excellent impact resistance of a molded body. The melt mass-flow rate is a value measured according to the standard described in the annex document B of JIS K7210-01:2014 under a load of 2.16 kg. The measurement temperature varies depending on the kind of the thermoplastic resin, and for example, it is 230°C for a propylene resin, and is 275°C for a polyamide resin.

The thermoplastic resin contained in the molding precursor and the molded body according to the present invention, in other words, the thermoplastic resin contained in the thermoplastic material constituting the molding precursor and the molded body according to the present invention may contain only one kind of the thermoplastic resin or two or more kinds of the thermoplastic resins.

The molding precursor and the molded body according to the present invention, in other words, the thermoplastic material constituting the molding precursor and the molded body according to the present invention may contain a filler. The filler includes mica, glass flake, glass fiber, talc, and carbon fiber. These may be used each singly or two or more of them may be used in combination.

As the filler, mica, talc and glass fiber are preferable from the standpoint of moldability.

The content of the filler in the molding precursor and the molded body according to the present invention is preferably 60% by mass or less, more preferably 40% by mass or less, from the standpoint of moldability, when the mass of the molding precursor or the molded body is 100% by mass.

The content of the thermoplastic resin in the molding precursor and the molded body according to the present invention, more specifically, in the thermoplastic material constituting the molding precursor and the molded body according to the present invention, is preferably 40% by mass or more, more preferably 60% by mass or more, when the mass of the molding precursor or the molded body, or of the thermoplastic material constituting the molding precursor and the molded body is 100% by mass.

The molding precursor and the molded body according to the present invention may contain at least one or more additives. The additive includes, for example, an antioxidant, an ultraviolet absorber, an antistatic agent, a lubricant, a crystal nucleating agent, a pressure-sensitive adhesive, an anti-fogging agent, an anti-blocking agent, and a flame retardant.

The bending elastic modulus measured at 23°C of the thermoplastic resin contained in the molding precursor and the molded body according to the present invention is preferably 500 MPa or more, more preferably 1000 MPa or more. When the bending elastic modulus of the thermoplastic resin is 500 MPa or more, appearance of a molded body is excellent. The bending elastic modulus can be determined by a bending test conducted according to the method described in ASTM-D790 using a bending tester. As the test piece for a bending test, a piece having a width of 12.7 mm and a length of 127 mm cut out from a sheet having a thickness of 2 mm fabricated by melt press molding is used.

The molding precursor in the present invention is obtained by heating the thermoplastic material containing the thermoplastic resin at a temperature not lower than the melting point or the glass transition point of the thermoplastic resin to melt the thermoplastic resin, then, molding the thermoplastic material, thereafter, solidifying the thermoplastic material by cooling.

The method for producing the molding precursor includes, for example, general resin molding methods such as an injection molding method, and a press molding method. When the molding precursor contains a filler or an additive or when the molding precursor contains a plurality of thermoplastic resins, a plurality of thermoplastic resins and, a filler or an additive to be added if necessary, are previously melt-kneaded using a Bunbury mixer, a single screw extruder, and a co-rotating twin screw extruder to give a thermoplastic resin composition, and a molding precursor can be produced using the thermoplastic resin composition.

The shape of the molding precursor is arbitrary and includes, for example, cylinder, circular cone, cube, and cuboid, and preferable is cube or cuboid. Further, the molding precursor may also be a multi-layered body, and thermoplastic resins contained in each layer of the multi-layered body may be mutually the same or different.

The method according to the present invention is a molded body production method comprising a step of compressing a molding precursor containing a thermoplastic resin between a pair of molding dies having an insulation site at a surface coming into contact with the molding precursor, to obtain a molded body, wherein

the temperature $T_A$ of the molding precursor at the start of compression satisfies the following formula 1,

the temperature of the pair of molding dies at the start of compression is temperature $T_B$ satisfying the following formula 2, and

the insulation site is an insulation site, wherein a heat conduction coefficient is5 W/(m•K) or less and the dynamic friction coefficient of the surface coming into contact with the molding precursor against the molding precursor is 0.25 or less:

$$\text{formula 1: } E'(-100) \times 0.04 < E'(T_A) < E'(-100) \times 0.13$$

$$\text{formula 2: } E'(-100) \times 0.3 < E'(T_B) < E'(-100) \times 0.7$$

$E'(T_A)$ is a value of the storage elastic modulus of the molding precursor at the temperature $T_A$, $E'(T_B)$ is a value of the storage elastic modulus of the molding precursor at the temperature $T_B$, and $E'(-100)$ is a value of the storage elastic modulus of the molding precursor at - 100°C.

In other words, the method according to the present invention is a molded body production method comprising compressing a molding precursor containing a thermoplastic resin with a pair of molding dies having an insulation site at a surface coming into contact with the molding precursor, to obtain a molded body, wherein
the insulation site has a heat conduction coefficient of 5 W/(m•K) or less and has a surface coming into contact with the molding precursor, and the dynamic friction coefficient of the surface against the molding precursor is 0.25 or less, and the molding precursor is compressed under conditions satisfying the following formulae 1 and 2:

$$\text{formula 1: } E'(-100) \times 0.04 < E'(T_A) < E'(-100) \times 0.13$$

$$\text{formula 2: } E'(-100) \times 0.3 < E'(T_B) < E'(-100) \times 0.7$$

(wherein, $E'(T_A)$ is a value of the storage elastic modulus of the molding precursor at the temperature $T_A$ ($T_A$ is the temperature of the molding precursor at the start of compression), $E'(T_B)$ is a value of the storage elastic modulus of the molding precursor at the temperature $T_B$ ($T_B$ is the temperature of the pair of molding dies at the start of compression), and $E'(-100)$ is a value of the storage elastic modulus of the molding precursor at - 100°C.).

The temperature $T_A$ is the temperature of the central part of the molding precursor when compression is started between molding dies, and measured using a thermocouple and the like. The temperature $T_A$ is determined so as to satisfy the formula 1, and preferably determined so as to satisfy the following formula 3.

$$\text{formula 3: } E'(-100) \times 0.05 < E'(T_A) < E'(-100) \times 0.08$$

Temperature dependence of the storage elastic modulus (E') of the molding precursor is measured using a dynamic viscoelasticity measuring apparatus under the following conditions.

strain amount: 0.025%
frequency: 10 Hz
stress mode: tension mode
heating condition: heated at a temperature rising rate of 3°C/min

As the method for adjusting the temperature of the molding precursor to the temperature $T_A$, for example, a method of heating the molding precursor in a heating device such as a circulating hot-blast mode heating oven or the like is mentioned.

A pair of molding dies used in the present invention have molding surfaces at least partially coming into contact with the molding precursor in compressing the molding precursor, and each molding surface has an insulation site. Further particularly, each molding surface has the insulation site at least at a part coming into contact with the molding precursor in compressing the molding precursor. The insulation site has a heat conduction coefficient of 5 W/(m•K) or less, and the dynamic friction coefficient of the surface coming into contact with the molding precursor against the molding precursor is 0.25 or less. In other words, the insulation site has a surface coming into contact with the molding precursor, and the dynamic friction coefficient of the surface against the molding precursor is 0.25 or less. In the method of the present invention, it is preferable that the molding precursor does not come into contact with parts other than the insulation site of the molding die in compressing the molding precursor.

The dynamic friction coefficient is preferably 0.2 or less, and the heat conduction coefficient is preferably 1 W/(m•K) or less.

The dynamic friction coefficient of the surface of the insulation site coming into contact with the molding precursor against the molding precursor is measured according to a method described in JIS K7125 using a friction measuring machine. The dynamic friction coefficient of the surface of the insulation site coming into contact with the molding precursor against the molding precursor can be controlled by adjusting the surface state of the insulation site.

The heat conduction coefficient of the insulation site of a molding die is measured by a laser flash method using a heat conduction coefficient measuring apparatus. The measurement temperature is 23°C.

The thickness of the insulation site is preferably 10 $\mu$m or more and 500 $\mu$m or less, more preferably 50 $\mu$m or more and 300 $\mu$m or less, from the standpoint of surface appearance and molding cycle of a molded body.

As the material of the insulation site, polymer materials and ceramic materials are preferably used, from the standpoint of durability and heat resistance. The polymer material includes, for example, polyimides and polyethylene terephthalate. The ceramic material includes, for example, zirconia.

It is preferable that the molding die has a base material layer and an insulation site. As the material of the base material layer, metals are preferable, from the standpoint of durability and heat resistance.

From the standpoint of durability of the insulation site of the molding die, the tensile elastic modulus of the insulation site is preferably 1500 MPa or more, more preferably 3000 MPa or more. The tensile elastic modulus can be determined according to a method described in ASTM-D638 using a tensile tester. As the test piece for the tensile test, the insulation site cut into type I of ASTM-D638 is used.

The insulation site in the present invention may be a single-layered body or a multi-layered body in which respective layers are consisting of different materials. For example, for the purpose of reducing the dynamic friction coefficient of the surface of the insulation site coming into contact with the molding precursor against the molding precursor, a layer containing a friction reducing agent such as a release agent or the like may be provided as the outermost layer of the insulation site. The friction reducing agent includes, for example, a fluorine-based release agent, and a silicone-based release agent.

The temperature $T_B$ of the pair of molding dies at the start of compression is preferably determined so as to satisfy the following formula 4. "Temperature of molding die" in the present invention is the temperature of the surface of the insulation site of the molding die coming into contact with the molding precursor, and is measured using a thermocouple and the like. The temperature of the molding die can be controlled by known temperature controlling means.

$$\text{formula 4: } E'(-100) \times 0.35 < E'(T_B) < E'(-100) \times 0.55$$

The temperature T of the molding die is preferably determined so as to satisfy the formula 2', more preferably determined so as to satisfy the formula 4' from the start of compression until the completion of compression.

$$\text{formula 2': } E'(-100) \times 0.3 < E'(T) < E'(-100) \times 0.7$$

$$\text{formula 4': } E'(-100) \times 0.35 < E'(T) < E'(-100) \times 0.55$$

E'(T) is a value of the storage elastic modulus at the temperature T of the molding precursor.

In the pair of molding dies, the temperature of one molding die and the temperature of the other molding die may be the same or different.

The apparatus for compressing the molding precursor with a pair of molding die includes, for example, a press molding machine having a temperature regulation function, a truck belt type heat and press molding machine, a pressurizable belt type sealer, and a stretch roll molding machine.

In the step of compressing the molding precursor with a pair of molding die to obtain a molded body, the compression ratio is preferably 2 or more and 50 or less, more preferably 4 or more and 30 or less. The compression ratio is a value obtained by dividing the thickness of the molding precursor before compression by the thickness of the molded body obtained by compression. When the compression ratio is within the range, impart resistance and appearance of the molded body are more excellent.

In the step of compressing the molding precursor with a pair of molding dies to obtain a molded body, the compression rate is preferably 1 mm/sec or more and 1000 mm/sec or less, more preferably 10 mm/sec or more and 100 mm/sec or less. The compression rate is a value of change in the thickness of the molding precursor per second when compressing the molding precursor with a pair of molding dies. When the compression rate is within the range, appearance of the molded body is more excellent and impact resistance thereof is also more excellent.

In the step of compressing the molding precursor with a pair of molding dies to obtain a molded body, pressure may be released immediately after compressing the molding precursor until prescribed compression ratio, and for obtaining more excellent thermal stability of the molded body, it may be permissible that compression is performed until prescribed compression rate, followed by keeping the molded body between molding dies still under pressed condition. The keeping time is preferably 0.1 minute or more and 10 minutes or less, more preferably 0.5 minutes or more and 5 minutes or less, from the standpoint of shortening of the molding cycle. It is preferable that the surface temperature of molding dies during keeping pressed condition remains the set surface temperature $T_B$ at the start of compression.

The molded body obtained by the method of the present invention can be further molding-processed into a desired shape using a known method such as a vacuum molding method, a compressed air molding method, and a press molding method .

The molded body obtained by the method of the present invention can be bonded to other resins, metals, paper or leather to obtain a multi-layered structure.

The molded body obtained by the method of the present invention has good appearance and is excellent in impact resistance, and can be used in applications such as vehicle members like automobile interior materials, and exterior materials, electric and electronic device parts like home electrical appliances, architectural members like floor materials, roof materials, industrial and manufacturing equipment parts, and medical equipment parts.

EXAMPLES

The present invention will be illustrated using Examples and Comparative Examples below.

(Evaluation method)

(1) Melt mass-flow rate (MFR, unit: g/10 min) of thermoplastic resin

MFR of a thermoplastic resin was measured according to a method prescribed in JIS K7210. The measurement conditions were a measurement temperature of 230°C and a load of 2.16 kg.

(2) Bending elastic modulus (unit: MPa) of thermoplastic resin

A thermoplastic resin was melt-press-molded, to fabricate a sheet having a thickness of 2 mm. A test piece having a width of 12.7 mm and a length of 127 mm was cut out from the resultant sheet. According to a method described in ASTM-D790, the bending elastic modulus of the fabricated test piece at 23°C was measured.

(3) Temperature dependence of storage elastic modulus (E', unit: Pa) of molding precursor

A test piece having a width of 5 mm and a length of 30 mm was cut out from a molding precursor, and used for measurement.

The temperature of the test piece was continuously raised while shaking the test piece using a dynamic viscoelasticity measuring apparatus (FT Rheospectler, manufactured by UBM) under the following conditions, and temperature dependence of E' was determined.

strain amount: 0.025%
frequency: 10 Hz
stress mode: tension mode
temperature rising rate: 3°C/min

(4) Dynamic friction coefficient of surface of insulation site of molding die coming into contact with molding precursor against molding precursor

An insulation site was cut out from a molding die into size having a width of 80 mm and a length of 100 mm, and the dynamic friction coefficient of the surface of the insulation site coming into contact with a molding precursor against the molding precursor was measured according to a method described in JIS K7125 using a friction measuring machine (manufactured by Toyo Seiki Co., Ltd.). The measurement temperature was 23°C.

(5) Tensile elastic modulus (unit: MPa) of insulation site

An insulation site was cut out from a molding die into typeI of ASTM-D638. The tensile elastic modulus of the cut-out insulation site was measured according to a method described in ASTM-D638. The measurement temperature was 23°C.

(6) Heat conduction coefficient (unit: W/m·K) of insulation site of molding die

An insulation site was cut out from a molding die into size having a width of 100 mm and a length of 100 mm. The heat conduction coefficient of the cut-out insulation site was measured by a laser flash method using a heat conduction measuring apparatus (LFA 457 MicroFlash manufactured by NETZSCH).

(7) Izod impact strength (unit: $kJ/m^2$) of molded body

The impact resistance of a molded body was measured by an Izod impact strength test. A test piece having a width of 12.8 mm and a length of 63.5 mm was cut out from a molded body and notched, then, the Izod impact strength of the resultant test piece at 23°C was measured according to JIS K7110.

(8) Surface appearance of molded body

The surface appearance of the resultant molded body was judged according to criteria show below.

evaluation 1: surface is smooth, and warpage is scarcely recognized.
evaluation 2: surface is smooth, but warpage is recognized, alternatively, surface is not smooth, but warpage is not recognized.
evaluation 3: surface is not smooth, and warpage is recognized.

(9) Evaluation of molding cycle

The molding cycle was evaluated by measuring time from the start of compression of a molding precursor until the surface temperature of a molded body reached the temperature of a molding die. Shorter the time is, shorter the molding cycle is.

(Example 1)

(Fabrication of molding precursor)

A propylene resin (NOBLEN FLX80E4 manufactured by Sumitomo Chemical Co., Ltd., MFR = 7.8 g/10 min, bending elastic modulus = 2000 MPa) (60% by mass) and talc (HAR W92 manufactured by Imerys) (40% by mass) were pre-mixed uniformly, then, the mixture was melt-kneaded with heating using a 15 mm twin screw extruder KZW15-45MG (manufactured by TECHNOVEL Corporation) under conditions of a cylinder set temperature of 220°C, a screw rotation speed of 5100 rpm and an extrusion rate of about 415 kg/hr, to produce a thermoplastic resin composition. The thermoplastic resin composition was injection-molded using type SI30III injection molding machine manufactured by Toyo Machinery & Metal Co., Ltd. at a molding temperature of 220°C and a die temperature of 50°C, to obtain an injection-molded body with size having a width of 50 mm and length of 50 mm and a thickness of 3 mm. A laminate obtained by stacking four pieces of the resultant injection-molded bodies was used as a molding precursor. E' values at -100°C, 80°C and 163°C of the molding precursor were $6.3\times10^9$ Pa, $2.4\times10^9$ Pa and $3.5\times10^8$ Pa, respectively.

(Molding die)

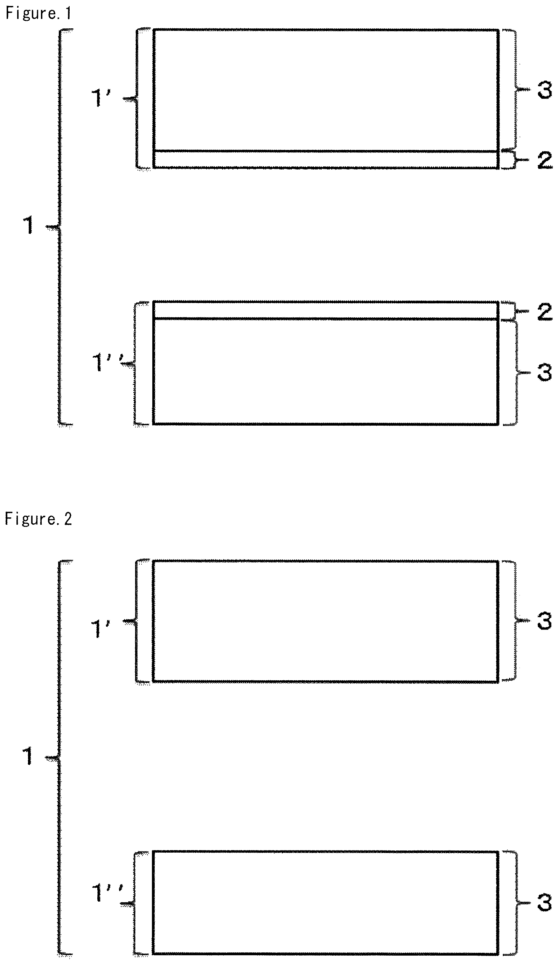

In a press machine equipped with a molding die (1) consisting of an upper die (1') and a lower die (1") having a base material layer (3) and an insulation site (2) both of which are made of SUS shown in Fig. 1, the surface temperature of the molding die (that is, the surface temperature of an insulation site) was set at 80°C. The insulation site was constituted of CERAPEEL Q1(S) (manufactured by Toray Advanced Film Co., Ltd., thickness: 188 $\mu$m) polyester film having undergone a mold-releasing treatment on the outermost surface. The tensile elastic modulus and the heat conduction coefficient of the insulation site and the dynamic friction coefficient of the outermost layer of the insulation site (that is, the surface coming into contact with the molding precursor) against the molding precursor are shown in Table 1.

(Production of molded body)

A molding precursor was heated at 163°C using a hot air oven. Thereafter, the molding precursor having a total thickness of 12 mm was placed on the top surface of the lower die (1") of the molding die, and compressed at a rate of 10 mm/sec so that the distance between the molding dies was 2 mm (compression ratio: 6-fold). The physical properties, surface appearance and molding cycle of the resultant molded body are shown in Table 2 below.

(Example 2)

A molded body was produced under the same conditions as in Example 1 except that the temperature of the molding precursor was 155°C. The E' value of the molding precursor at 155°C was $6.6\times10^8$ Pa. The physical properties, surface appearance and molding cycle of the resultant molded body are shown in Table 2 below.

(Example 3)

A molded body was produced under the same conditions as in Example 1 except that the surface temperature of the molding die (that is, the surface temperature of the insulation site) was 30°C. The E' value of the molding precursor at 30°C was $3.8\times10^9$ Pa. The physical properties, surface appearance and molding cycle of the resultant molded body are shown in Table 2 below.

(Example 4)

A molded body was produced under the same conditions as in Example 1 except that a layer composed of a silicone-based release agent provided on the surface layer of Kapton (registered trademark, manufactured by Dupont Toray Co., Ltd., 120 $\mu$m) polyimide film was used as the insulation site. The tensile elastic modulus and the heat conduction coefficient of the insulation site and the dynamic friction coefficient of the outermost layer of the insulation site (that is, the surface coming into contact with the molding precursor) against the molding precursor are shown in Table 1. The physical properties, surface appearance and molding cycle of the resultant molded body are shown in Table 2 below.

(Example 5)

(Fabrication of molding precursor)

As the thermoplastic resin, high density polyethylene (M6910 manufactured by Keiyo Polyethylene Co., Ltd., MFR = 23 g/10 min, bending elastic modulus = 1100 MPa) was used. The thermoplastic resin was injection-molded using type SI30III injection molding machine manufactured by Toyo Machinery & Metal Co., Ltd. at a molding temperature of 190°C and a die temperature of 50°C, to obtain an injection-molded body with size having a width of 50 mm and a length of 50 mm and a thickness of 3 mm. A laminate obtained by stacking four pieces of the injection-molded bodies was used as the molding precursor. The E' values at -100°C, 40°C and 125°C of the molding precursor were $2.4\times10^9$ Pa, $1.2\times10^9$ Pa and $1.1\times10^8$ Pa, respectively.

(Molding die)

The same article as in Example 1 was used.

(Production of molded body)

A molding precursor was heated at 125°C using a hot air oven. Thereafter, the molding precursor having a total thickness of 12 mm was placed on the top surface of the lower die of the molding die, and compressed at a rate of 30 mm/sec so that the distance between the molding dies was 2 mm (compression ratio: 6-fold). The physical properties, surface appearance and molding cycle of the resultant molded body are shown in Table 2 below.

(Comparative Example 1)

A molded body was produced under the same conditions as in Example 1 except that Kapton (registered trademark, manufactured by Dupont Toray Co., Ltd., 120 $\mu$m) polyimide film was used as the insulation site. The tensile elastic modulus and the heat conduction coefficient of the insulation site and the dynamic friction coefficient of the outermost layer of the insulation site (that is, the surface coming into contact with the molding precursor) against the molding precursor are shown in Table 3. The physical properties, surface appearance and molding cycle of the resultant molded body are shown in Table 4 below.

(Comparative Example 2)

A molded body was produced under the same conditions as in Example 1 except that the temperature of the molding precursor was 170°C. The E' value of the molding precursor at 170°C was $9.6 \times 10^7$ Pa. The physical properties, surface appearance and molding cycle of the resultant molded body are shown in Table 4 below.

(Comparative Example 3)

A molded body was produced under the same conditions as in Example 1 except that the temperature of the molding precursor was 140°C. The E' value of the molding precursor at 140°C was $1.1 \times 10^9$ Pa. The physical properties, surface appearance and molding cycle of the resultant molded body are shown in Table 4 below.

(Comparative Example 4)

A molded body was produced under the same conditions as in Example 1 except that the surface temperature of the molding die, that is, the surface temperature of the insulation site, was 110°C. The E' value of the molding precursor at 110°C was $1.8 \times 10^9$ Pa. The physical properties, surface appearance and molding cycle of the resultant molded body are shown in Table 4 below.

(Comparative Example 5)

A molded body was produced under the same conditions as in Example 1 except that the surface temperature of the molding die, that is, the surface temperature of the insulation site, was 5°C. The E' value of the molding precursor at 5°C was $4.6 \times 10^9$ Pa. The physical properties, surface appearance and molding cycle of the resultant molded body are shown in Table 4 below.

(Reference Example 1)

In a press machine equipped with a molding die (1) comprising an upper die (1') and a lower die (1") comprising a base material layer (3) both of which are made of SUS shown in Fig. 2, the surface temperature of the molding die was set at 160°C. The same molding precursor as in Example 1 (total thickness = 12 mm) was placed on the top surface of the lower die (1") of the molding die at 23°C, and compressed at a rate of 1 mm/sec so that the distance between the molding dies was 2 mm (compression ratio: 6-fold). Thereafter, the surface temperature of the molding die was cooled down to 80°C. The E' values at 23°C and 160°C of the molding precursor were $4.0 \times 10^9$ Pa and $4.7 \times 10^8$ Pa, respectively. The physical properties, surface appearance and molding cycle of the resultant molded body are shown in Table 4 below.

(Reference Example 2)

In a press machine equipped with the molding die shown in Reference Example 1, the surface temperature of the molding die was set at 125°C. The same molding precursor as in Example 5 was placed on the top surface of the lower die of the molding die at 23°C, and compressed at a rate of 1 mm/sec so that the distance between the molding dies was 2 mm (compression ratio: 6-fold). Thereafter, the surface temperature of the molding die was cooled down to 40°C. The E' value at 23°C of the molding precursor was $1.5 \times 10^9$ Pa. The physical properties, surface appearance and molding cycle of the resultant molded body are shown in Table 4 below.

[Table 1]

|  | Examples | | | | |
|---|---|---|---|---|---|
|  | 1 | 2 | 3 | 4 | 5 |
| Thermoplastic material | Propylene resin + talc | Propylene resin + talc | Propylene resin + talc | Propylene resin + talc | High density polyethylene |
| Tensile elastic modulus (MPa) of insulation site of molding die | 5064 | 5064 | 5064 | 4127 | 5064 |
| Heat conduction coefficient (W/(m•K)) of insulation site of molding die | 0.12 | 0.12 | 0.12 | 0.10 | 0.12 |
| Dynamic friction coefficient between insulation site of molding die and molding precursor | 0.13 | 0.13 | 0.13 | 0.22 | 0.13 |

(continued)

| | Examples | | | | |
|---|---|---|---|---|---|
| | 1 | 2 | 3 | 4 | 5 |
| Temperature $T_A$ (°C) of molding precursor at the start of compression | 163 | 155 | 163 | 163 | 125 |
| Surface temperature $T_B$ (°C) of molding die at the start of compression | 80 | 80 | 30 | 80 | 40 |
| E'(-100) | $6.3\times10^9$ | $6.3\times10^9$ | $6.3\times10^9$ | $6.3\times10^9$ | $2.4\times10^9$ |
| ×0.04 | $2.5\times10^8$ | $2.5\times10^8$ | $2.5\times10^8$ | $2.5\times10^8$ | $9.6\times10^7$ |
| ×0.13 | $8.2\times10^8$ | $8.2\times10^8$ | $8.2\times10^8$ | $8.2\times10^8$ | $3.1\times10^8$ |
| ×0.3 | $1.9\times10^9$ | $1.9\times10^9$ | $1.9\times10^9$ | $1.9\times10^9$ | $7.2\times10^8$ |
| ×0.7 | $4.4\times10^9$ | $4.4\times10^9$ | $4.4\times10^9$ | $4.4\times10^9$ | $1.7\times10^9$ |
| E' ($T_A$) | $3.5\times10^8$ | $6.6\times10^8$ | $3.5\times10^8$ | $3.5\times10^8$ | $1.1\times10^8$ |
| E' ($T_B$) | $2.4\times10^9$ | $2.4\times10^9$ | $3.8\times10^9$ | $2.4\times10^9$ | $1.2\times10^9$ |
| Formula 1 | satisfied | satisfied | satisfied | satisfied | satisfied |
| Formula 2 | satisfied | satisfied | satisfied | satisfied | satisfied |

[Table 2]

| | Examples | | | | |
|---|---|---|---|---|---|
| | 1 | 2 | 3 | 4 | 5 |
| Izod impact strength ( $kJ/m^2$ ) | 33 | 32 | 24 | 22 | 43 |
| Evaluation of appearance | 1 | 1 | 1 | 1 | 1 |
| Molding cycle (min) | 1 | 1 | 1 | 1 | 1 |

[Table 3]

| | Comparative Examples | | | | | Reference Examples | |
|---|---|---|---|---|---|---|---|
| | 1 | 2 | 3 | 4 | 5 | 1 | 2 |
| Thermoplastic material | Propylene resin + talc | Propylene resin + talc | Propylene resin + talc | Propylene resin + talc | Propylene resin + talc | Propylene resin + talc | High density polyethylene |
| Tensile elastic modulus (MPa) of insulation site of molding die | 5064 | 5064 | 5064 | 5064 | 5064 | - | - |
| Heat conduction coefficient (W/(m•K)) of insulation site of molding die | 0.10 | 0.12 | 0.12 | 0.12 | 0.12 | - | - |
| Dynamic friction coefficient between insulation site of molding die and molding precursor | 0.30 | 0.13 | 0.13 | 0.13 | 0.13 | - | - |
| Temperature (°C) of molding precursor at the start of compression | 163 | 170 | 140 | 163 | 163 | 23 | 23 |
| Surface temperature (°C) of molding die at the start of compression | 80 | 80 | 80 | 110 | 5 | 160 | 125 |
| E' (-100) | $6.3 \times 10^9$ | $6.3 \times 10^9$ | $6.3 \times 10^9$ | $6.3 \times 10^9$ | $6.3 \times 10^9$ | $6.3 \times 10^9$ | $2.4 \times 10^9$ |
| ×0.04 | $2.5 \times 10^8$ | $2.5 \times 10^8$ | $2.5 \times 10^8$ | $2.5 \times 10^8$ | $2.5 \times 10^8$ | $2.5 \times 10^8$ | $9.6 \times 10^7$ |
| ×0.13 | $8.2 \times 10^8$ | $8.2 \times 10^8$ | $8.2 \times 10^8$ | $8.2 \times 10^8$ | $8.2 \times 10^8$ | $8.2 \times 10^8$ | $3.1 \times 10^8$ |
| ×0.3 | $1.9 \times 10^9$ | $1.9 \times 10^9$ | $1.9 \times 10^9$ | $1.9 \times 10^9$ | $1.9 \times 10^9$ | $1.9 \times 10^9$ | $7.2 \times 10^8$ |
| ×0.7 | $4.4 \times 10^9$ | $4.4 \times 10^9$ | $4.4 \times 10^9$ | $4.4 \times 10^9$ | $4.4 \times 10^9$ | $4.4 \times 10^9$ | $1.7 \times 10^9$ |
| E' ($T_A$) | $3.5 \times 10^8$ | $9.6 \times 10^7$ | $1.1 \times 10^9$ | $3.5 \times 10^8$ | $3.5 \times 10^8$ | $4.0 \times 10^9$ | $1.5 \times 10^9$ |
| E' (TB) | $2.4 \times 10^8$ | $2.4 \times 10^8$ | $2.4 \times 10^8$ | $1.8 \times 10^8$ | $4.6 \times 10^9$ | $4.7 \times 10^8$ | $1.1 \times 10^8$ |
| Formula 1 | satisfied | unsatisfied | unsatisfied | satisfied | satisfied | unsatisfied | unsatisfied |
| Formula 2 | satisfied | satisfied | satisfied | unsatisfied | unsatisfied | unsatisfied | unsatisfied |

[Table 4]

|  | Comparative Examples | | | | | Reference Examples | |
| --- | --- | --- | --- | --- | --- | --- | --- |
|  | 1 | 2 | 3 | 4 | 5 | 1 | 2 |
| Izod impact strength (kJ/m$^2$) | 12 | 2.0 | 21 | 25 | 20 | 27 | 42 |
| Evaluation of appearance | 2 | 1 | 2 | 2 | 3 | 1 | 1 |
| Molding cycle (min) | 1 | 1 | 1 | 1 | 1 | 15 | 10 |

Industrial Applicability

The method of the present invention can be effectively used for producing a molded body of a thermoplastic material in short molding cycle.

Description of reference numerals

1　　molding die
1'　　molding die (upper die)
1"　　molding die (lower die)
2　　insulation site
3　　base material layer

**Claims**

**1.** A method for producing a molded body comprising a step of compressing a molding precursor comprising a thermoplastic resin between a pair of molding dies having an insulation site at a surface coming into contact with the molding precursor, to obtain a molded body, wherein
the temperature $T_A$ of said molding precursor at the start of compression satisfies the following formula 1,
the temperature of said pair of molding dies at the start of compression is temperature $T_B$ satisfying the following formula 2, and
said insulation site is an insulation site, wherein a heat conduction coefficient is 5 W/(m•K) or less and the dynamic friction coefficient of the surface coming into contact with said molding precursor against said molding precursor is 0.25 or less:

$$\text{formula 1: } E'(-100)\times0.04 < E'(T_A) < E'(-100)\times0.13$$

$$\text{formula 2: } E'(-100)\times0.3 < E'(T_B) < E'(-100)\times0.7$$

(wherein, $E'(T_A)$ is a value of the storage elastic modulus of the molding precursor at the temperature $T_A$, $E'(T_B)$ is a value of the storage elastic modulus of the molding precursor at the temperature $T_B$, and $E'(-100)$ is a value of the storage elastic modulus of the molding precursor at -100°C.).

**2.** The method for producing the molded body according to Claim 1, wherein the thickness of said insulation site is 10 $\mu$m to 500 $\mu$m.

**3.** The method for producing the molded body according to Claim 1 or 2, wherein said thermoplastic resin is a propylene resin.

Figure. 1

Figure. 2

<table>
<tr><td colspan="2" align="center">**INTERNATIONAL SEARCH REPORT**</td><td>International application No.<br>PCT/JP2016/075648</td></tr>
</table>

**A. CLASSIFICATION OF SUBJECT MATTER**
*B29C43/02*(2006.01)i, *B29C43/32*(2006.01)i, *B29C43/52*(2006.01)i

According to International Patent Classification (IPC) or to both national classification and IPC

**B. FIELDS SEARCHED**

Minimum documentation searched (classification system followed by classification symbols)
B29C43/02, B29C43/32, B29C43/52

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| E,A | JP 2016-169271 A (Mitsubishi Rayon Co., Ltd.),<br>23 September 2016 (23.09.2016),<br>entire text<br>(Family: none) | 1-3 |
| A | WO 2012/140793 A1 (Teijin Ltd.),<br>18 October 2012 (18.10.2012),<br>entire text<br>& JP 5702854 B     & US 2014/0039114 A1<br>& EP 2698396 A1     & CN 103476840 A<br>& KR 10-2014-0024312 A   & RU 2013150598 A<br>& TW 201241056 A | 1-3 |

☐ Further documents are listed in the continuation of Box C.     ☐ See patent family annex.

| | |
|---|---|
| *	Special categories of cited documents:<br>"A"	document defining the general state of the art which is not considered to be of particular relevance<br>"E"	earlier application or patent but published on or after the international filing date<br>"L"	document which may throw doubts on priority claim(s) or which is cited to establish the publication date of another citation or other special reason (as specified)<br>"O"	document referring to an oral disclosure, use, exhibition or other means<br>"P"	document published prior to the international filing date but later than the priority date claimed | "T"	later document published after the international filing date or priority date and not in conflict with the application but cited to understand the principle or theory underlying the invention<br>"X"	document of particular relevance; the claimed invention cannot be considered novel or cannot be considered to involve an inventive step when the document is taken alone<br>"Y"	document of particular relevance; the claimed invention cannot be considered to involve an inventive step when the document is combined with one or more other such documents, such combination being obvious to a person skilled in the art<br>"&"	document member of the same patent family |

| Date of the actual completion of the international search<br>28 September 2016 (28.09.16) | Date of mailing of the international search report<br>11 October 2016 (11.10.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**EP 3 369 541 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI6164427 A